# FASCICULE DE BREVET EUROPEEN

(11) **EP 2 103 555 B1**
(45) Date de publication et mention de la délivrance du brevet: **26.10.2011**
(21) Numéro de dépôt: 09153678.9
(22) Date de dépôt: 25.02.2009
(51) Int. Cl.: B65G 21/06, B65G 21/20

(54) **Convoyeur équipé de supports pour le montage d' éléments tels qu'un rail de guidage latéral de charges**
Mit Halterungen ausgestattetes Förderband zur Montage von Elementen, wie eine seitliche Führungsschiene für Lasten
Conveyor equipped with supports for installing elements such as a side rail for guiding loads

(30) Priorité: 28.02.2008 FR 0801116
(43) Date de publication de la demande: 23.09.2009
(73) Titulaire: Société d'étude et de développement de la Productique, 56270 Ploemeur (FR)
(72) Inventeur: Le Du, Pierre, 29300, REDENE (FR); Borgne, Marie, 56440 LANGUIDIC (FR)
(74) Mandataire: Hays, Bertrand

(56) Documents cités:
- JP-A- 7 300 217
- JP-A- 8 133 444

## Description

La présente invention concerne un convoyeur selon le préambule de la revendication 1.

Il est connu des convoyeurs qui comprennent un châssis comportant deux longerons, reliés parallèlement entre eux par une ou plusieurs traverses, des moyens de convoyage de charges montés entre les deux longerons et définissant la surface de convoyage du convoyeur, tels que des rouleaux libres ou entraînés positivement en rotation, ou une bande sans fin par exemple, ledit châssis étant équipé d'au moins un support d'éléments apte à être assemblé par sa partie inférieure sur l'un des longerons et à porter par sa partie supérieure un élément au-dessus du plan de convoyage, tel qu'un rail de guidage latéral de charges. Ces potelets sont classiquement assemblés par leur partie inférieure au moyen de vis, et éventuellement d'écrous, sur un rebord supérieur du longeron, l'élément à fixer étant également assemblé en partie supérieure du potelet au moyen de vis et éventuellement d'écrous. Un tel convoyeur est décrit dans le document JP 08 133 444 A.

Les opérations de montage de ces potelets sur les longerons puis des rails sur les potelets, ainsi que les opérations de maintenance et de remplacement de ces rails et potelets, s'avèrent particulièrement longues et fastidieuses.

Le but de la présente invention est de proposer une solution visant à simplifier ces opérations de montage et démontage des potelets sur les longerons et d'éléments sur les potelets, tels que des rails de guidage sur des potelets, et ainsi réduire les coûts de montage et de maintenance des convoyeurs.

A cet effet, la présente invention a pour un convoyeur comprenant les caractéristiques de la revendication 1.

Selon l'invention, le support ou potelet se présente sous la forme d'une pince de type coulissant venant s'insérer par les parties inférieures de ses branches dans une gorge longitudinale du premier profilé, ladite pince étant équipée de moyens de serrage pour actionner l'une des branches de la pince pour à la fois serrer l'élément à fixer et verrouiller le potelet dans la gorge par insertion de l'ergot de la seconde branche dans une rainure formée dans l'une des parois constitutives de la gorge d'assemblage.

La fixation du potelet sur le longeron et la fixation de l'élément au potelet peuvent ainsi être réalisées en une seule opération. Ce système de potelet et de gorge d'assemblage du profilé selon l'invention permet de faciliter le montage d'éléments sur le convoyeur et de réduire le temps, et donc les coûts, de montage du convoyeur.

Selon une particularisé, les moyens de serrage sont aptes à maintenir la seconde branche en position de serrage et de verrouillage.

Selon un mode de réalisation, le premier profilé comprend une paroi principale verticale munie sur sa face extérieure d'une aile supérieure et d'une aile intermédiaire s'étendant latéralement vers l'extérieur, sensiblement perpendiculairement, depuis ladite paroi principale et définissant entre elles ladite gorge longitudinale en partie supérieure du profilé, lesdites branches comprenant des parties inférieures coudées aptes à venir s'insérer dans ladite gorge longitudinale.

Selon un mode de réalisation, chaque branche présente une forme générale en C, avec une partie centrale se prolongeant par ladite partie inférieure coudée et une partie supérieure coudée, et présente une section transversale globalement en U, avec une paroi centrale et deux parois latérales parallèles de sorte que la seconde branche puisse être montée coulissante dans la branche extérieure, les parois latérales de la première branche venant entre les parois latérales de la seconde branche, ledit ergot étant formé sur la paroi centrale de la seconde branche et étant apte à s'insérer dans une rainure ménagée au niveau de l'aile supérieure du premier profilé, les parties supérieures de la première branche et de la seconde branche formant respectivement une mâchoire supérieure de serrage et une mâchoire inférieure de serrage.

Selon une particularisé, en position de serrage et de verrouillage, le support est en butée par la paroi centrale de la première branche contre l'aile intermédiaire et en butée par le bord libre des parois latérales de la seconde branche contre l'aile supérieure, et/ou ledit ergot présente une paroi inclinée coopérant avec un bord de la rainure pour amener la partie inférieure de la seconde branche contre la paroi principale verticale du premier profilé.

Selon un mode de réalisation, les moyens de serrage comprennent au moins une vis passant par un perçage de la paroi principale de la première branche au niveau de sa partie supérieure et un perçage d'une paroi supérieure reliant les parois latérales de la seconde branche, le serrage d'un élément et le verrouillage du support étant obtenus par vissage de ladite vis dans un écrou placé sous ladite paroi supérieure.

Avantageusement la seconde branche comprend des moyens de retenue de la vis pour retenir la vis pré-vissée sur l'écrou lorsque la seconde branche est en position de repos, et/ou des moyens de maintien pour maintenir l'écrou sensiblement dans l'axe des perçages lorsque la seconde branche est montée dans la première branche. Le potelet peut ainsi être pré-monté avant utilisation, avec sa vis pré-vissée, ce qui permet d'optimiser le temps de montage du convoyeur. Les moyens de maintien sont par exemple formés de deux rainures inférieures formées sur les parois latérales de la seconde branche et d'une languette formée sur la paroi centrale de la première branche, ladite languette maintenant l'écrou entre la paroi supérieure et les deux rainures lorsque la seconde branche est insérée dans la première branche. Les moyens de retenue sont par exemple formés par une languette de la seconde branche contre un bord de laquelle la vis est vissée.

Selon une particularité, la paroi principale verticale du premier profilé est munie sur sa face extérieure d'une aile inférieure formant une rainure inférieure pour l'assemblage de traverses de liaison des longerons, l'aile intermédiaire et l'aile inférieure définissant une chambre latérale. La fixation des potelets en partie supérieure et le positionnement d'une rainure d'assemblage en partie inférieure pour l'assemblage des traverses ou de divers supports et/ou accessoires, permet de former une chambre latérale continue, refermable par un profilé d'habillage amovible, par exemple pour le passage de câble et/ou de conduites du convoyeur. Le premier profilé est avantageusement formé d'un matériau composite.

Selon une autre particularisé, chaque longeron comprend un second profilé pour le montage des moyens de convoyage, qui est assemblé sur la face intérieure du premier profilé, l'assemblage du second profilé étant avantageusement réalisé par insertion d'une aile inclinée vers l'extérieur de bas en haut du premier profilé dans une fente longitudinale du second profilé, le poids des moyens de convoyage supportés par le second profilé assurant le maintien du second profilé sur le premier profilé.

La présente invention a également pour objet un potelet tel que défini précédemment, destiné à être monté sur un longeron de convoyeur.

L'invention sera mieux comprise, et d'autres buts, détails, caractéristiques et avantages apparaîtront plus clairement au cours de la description explicative détaillée qui va suivre d'un mode de réalisation particulier actuellement préféré de l'invention, en référence aux dessins schématiques annexés, sur lesquels :
- la figure 1 représente une vue schématique en perspective d'un convoyeur selon l'invention ;
- la figure 2 est une vue en perspective éclatée des différents éléments constitutifs du convoyeur de la figure 1 ;
- la figure 3 est une vue en coupe longitudinale partielle du convoyeur de la figure 1 ;
- la figure 4 est une vue en coupe transversale partielle du convoyeur de la figure 1 ;
- la figure 5 est une vue agrandi partielle de la figure 4 illustrant le montage d'un potelet de rail de guidage sur le premier profilé d'un longeron ;
- la figure 6 est une vue en perspective éclatée des différents éléments constitutif d'un potelet, d'un tronçon de premier profilé et d'un tronçon de rail de guidage ; et,
- la figure 7 est une vue en perspective d'un potelet.

Le convoyeur illustré sur les figures est de type à rouleaux entraînés. Bien entendu la présente invention n'est pas limitée à ce type de convoyeur et peut être appliquée à tout type de convoyeur tel que des convoyeur à rouleaux libres, à bandes de type liaison, lanceur, convergent, déviateur, à incliné, à bande type trieur ou collecteur par exemple.

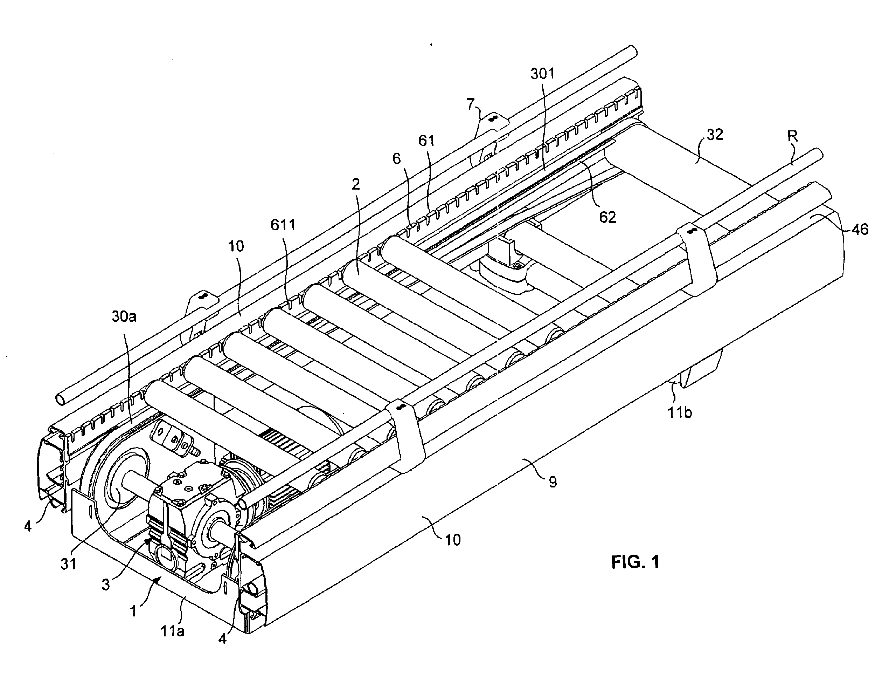

En référence aux figures 1 à 3, le convoyeur comprend un châssis 1 formé de longerons 10 parallèles, reliés entre eux par une ou plusieurs traverses inférieures, par exemple une traverse aval 11a et une traverse amont 11b, et entre lesquels sont montés libre en rotation une succession de rouleaux de convoyage 2, définissant la surface de convoyage du convoyeur. Les rouleaux de convoyage sont entraînés positivement en rotation au moyen d'un système d'entraînement 3 comprenant deux courroies 30a, 30b sur les brins supérieurs 301 desquelles les rouleaux de convoyage reposent.

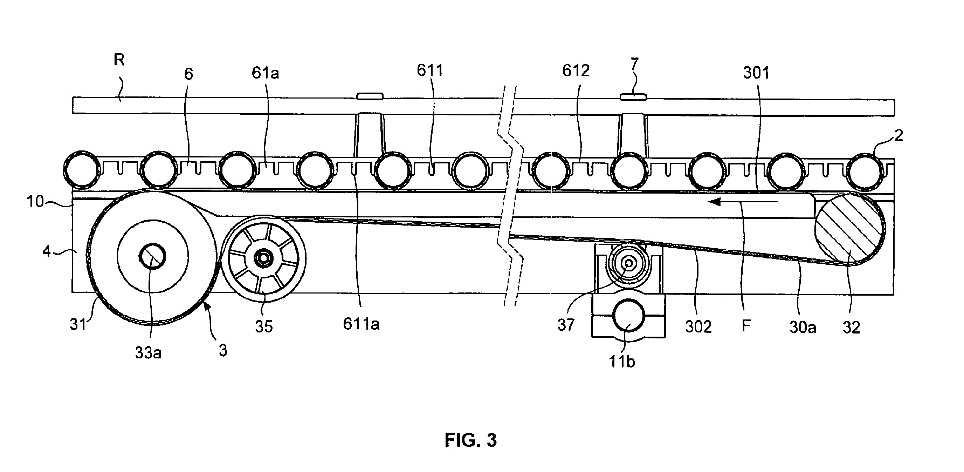

Chaque courroie 30a est montée entre une roue de renvoi aval et une roue de renvoi amont. Les roues de renvoi aval 31 sont assemblées à l'arbre 33a d'un moteur 33 d'entraînement en rotation. Le moteur est par exemple monté sur la traverse aval 11a et permet l'entraînement des brins supérieurs des courroies dans le sens d'avancement représenté par la flèche référencée F sur la figure 3. Dans le présent mode de réalisation les roues amont sont formées d'un seul et même rouleau de renvoi 32 monté rotatif entre les longerons, via des supports 34 assemblés en partie inférieure des longerons. Le système d'entraînement comprend avantageusement pour chaque courroie au moins un rouleau tendeur 35, monté par exemple via un support 36 sur la traverse aval, et agissant sur le brin inférieur 302 pour tendre la courroie. Avantageusement, la face de la courroie opposée aux rouleaux de convoyage est crantée et engrène sur des roues aval crantées. Un rouleau de maintien 37 est avantageusement monté rotatif au-dessus de la traverse amont pour supporter et guider le brin inférieur des courroies au dessus de ladite traverse.

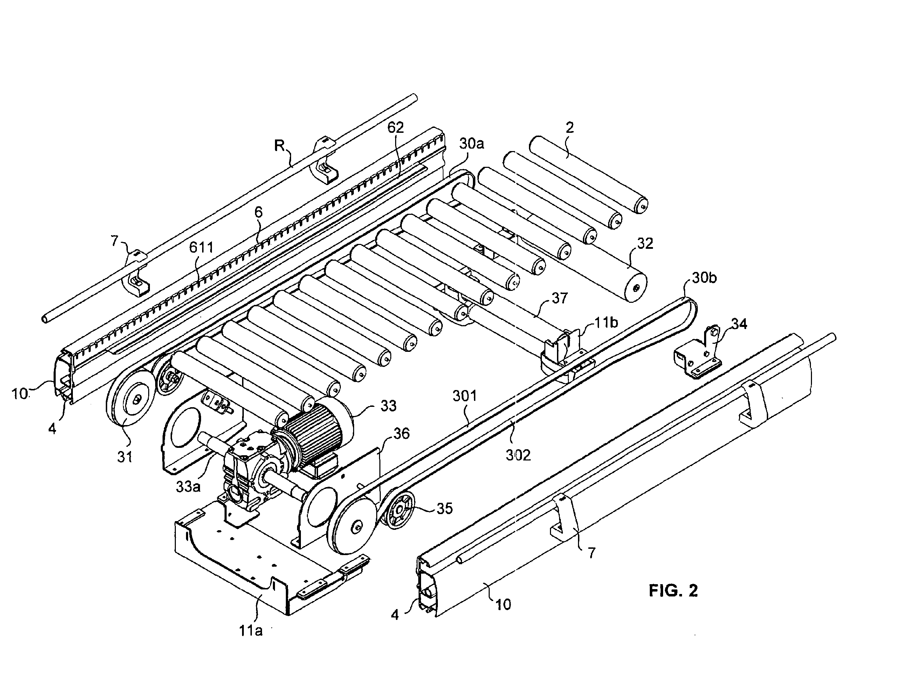

En référence en particulier aux figures 2 à 4, chaque longeron 10 comprend un premier profilé 4 comprenant une paroi verticale 41 principale. Un second profilé 6 est monté sur la face intérieure 41a de cette paroi principale pour permettre le positionnement des rouleaux de convoyage le long des longerons, ainsi que pour servir de support de glissement pour le brin supérieur 301 d'une courroie. Ce second profilé, de section transversale de forme générale en L, présente une première aile 61 et une deuxième aile 62 perpendiculaires l'une à l'autre. Ce second profilé est assemblé sur le premier profilé, la face extérieure de sa première aile contre la face intérieure 41 a du premier profilé. La première aile est munie d'une pluralité de rainures 611 formées sur la face intérieure 61 a de la première aile et débouchant sur le bord d'extrémité libre ou bord supérieur 612 de ladite première aile. Dans le présent mode de réalisation, lesdites rainures se présentent sous la forme d'encoches formées sur le bord supérieur de la première aile et traversant cette dernière de part en part, de la face intérieure à la face extérieure de la première aile.

Le montage des rouleaux de convoyage sur les longerons est réalisé en positionnant les parties d'extrémité 21 axiales cylindriques des rouleaux dans des rainures opposées des seconds profilés 6. Les rouleaux de convoyage sont sans roulement ou cage à billes, et sont formés de tubes cylindriques creux 22 fermés en extrémité par des parois latérales 23, les parties d'extrémité étant formées par des tétons cylindriques 21. Le tube et ses parois latérales munies des tétons peuvent être formés d'une seule pièce, de préférence en matériau plastique. En variante, les parois latérales sont formées par des embouts emmanchés et assemblés aux extrémités d'un tube creux, les tétons étant formés de petits axes, par exemple métalliques, assemblés sur lesdits embouts, ou par les extrémités d'un axe traversant unique du rouleau.

Chaque brin supérieur 301 d'une courroie est disposé à plat sur la surface supérieure de la seconde aile 62 d'un second profilé. Pour guider ledit brin supérieur, ce dernier est avantageusement positionné dans une gorge longitudinale 621 de faible profondeur ménagée sur la surface supérieure de l'aile, ladite gorge ayant une largeur sensiblement égale à celle de la courroie, sa profondeur étant inférieure à l'épaisseur de la courroie. Pour garantir un positionnement à plat du brin supérieur sur toute la longueur de la seconde aile, les roues de renvoi aval 31 et les roues de renvoi amont 32 sont disposées de sorte que le fond de ladite gorge soit disposé tangentiellement auxdites roues de renvoi. Tel que visible notamment sur les figures 2 et 3, le second profilé est dépourvu en extrémité de seconde aile pour permettre ce positionnement des roues de renvoi.

Les rainures 611 s'étendent sur une hauteur telle que, lorsque les deux tétons 21 d'un rouleau de convoyage sont positionnés dans deux rainures, le rouleau repose par la paroi cylindrique 220 de son tube 22 sur les deux brins supérieurs 301 des courroies, ses deux tétons étant disposés à distance du fond 611a des rainures. Les rainures, dans lesquels les tétons des rouleaux sont montés coulissant, servent uniquement à bloquer les rouleaux en position longitudinale le long des longerons pour empêcher que les rouleaux n'avancent dans le sens d'avancement F des courroies. Le pas des rainures est défini pour autoriser un pas de rouleaux adapté à la dimension et au comportement de la charge transportée. On comprend que ce système de rainures permet un montage et un remplacement aisés des rouleaux de convoyage. La liberté de déplacement vertical des tétons dans les rainures assure la compensation automatique de l'usure éventuelle des courroies et/ou du tube du rouleau. Pour éviter que les tétons des rouleaux ne sortent accidentellement des rainures, chaque rainure peut présenter un rétrécissement à proximité de son ouverture ou entrée sur le rebord supérieur, ledit rétrécissement étant formé par deux renflements opposés (non représentés) sur les parois verticales de la rainure. Les tétons sont alors insérés par clippage dans les rainures. En variante, une ou plusieurs baguettes, aptes à venir se clipper sur le bord supérieur, peuvent être prévues pour fermer les entrées des rainures sur ledit bord supérieurs 611b. En variante, les rainures peuvent être inclinées, de sorte que l'entrée de chaque rainure soit disposée en amont de son fond par rapport au sens d'avancement F du brin supérieur de la courroie, par exemple d'un angle de l'ordre de 45°.

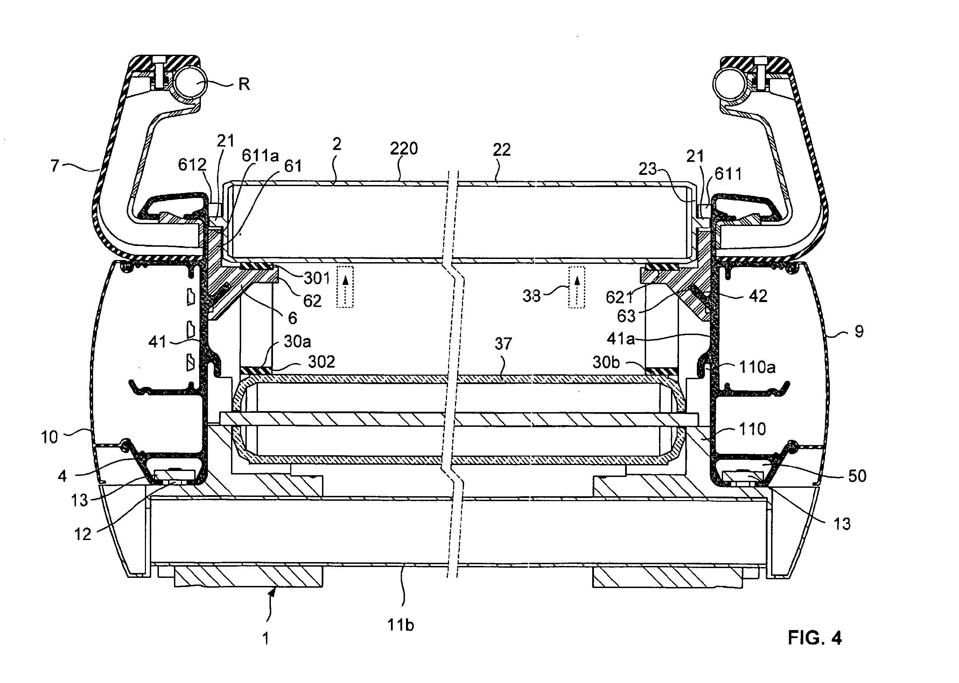

Selon un mode de réalisation, le convoyeur est équipé d'un système de débrayage permettant d'interrompre le contact d'entrainement entre les rouleaux de convoyage et les courroies. Ce système d'embrayage comprend par exemple des barres longitudinales centrales 38, représentées schématiquement en traits pointillés sur la figure 4, déplaçables par un système d'actionnement (non représenté) depuis une position basse inactive dans laquelle les barres sont écartées des rouleaux, tel qu'illustré à la figure 4, vers une position haute dans laquelle les barres soulèvent les rouleaux pour les écarter des courroies, et ainsi stopper sensiblement instantanément l'entrainement en rotation des rouleaux de convoyage. Dans cette position haute des barres, les tétons des rouleaux restent positionnés dans les rainures, les rouleaux reposent par leur tube sur les barres.

Le second profilé permet le montage des rouleaux d'entraînement et constitue une pièce d'usure qui pourra être remplacée en cas d'usure des rainures et/ou d'usure de la seconde aile due aux frottements de la courroie. Le premier profilé qui assure la rigidité du longeron, et permet l'assemblage des longerons l'un à l'autre par les traverses, est avantageusement réalisé en un matériau composite, par exemple à base d'une ou plusieurs résines et de carbone et/ou de fibres, telles que des fibres de verre. Le second profilé est avantageusement réalisé en un matériau plastique à caractéristiques de glissement.

Pour le montage du second profilé sur le premier profilé 4, la paroi principale 41 comprend sur sa face intérieure une aile 42 inclinée de bas en haut vers l'extérieur. Le montage du second profilé est réalisé par insertion de ladite aile inclinée dans une fente 63 du second profilé de forme complémentaire de celle de l'aile, ménagée sur la face extérieure de la première aile et s'étendant dans la deuxième aile. Le maintien du second profilé sur le premier profilé est assuré grâce aux poids des rouleaux de convoyage.

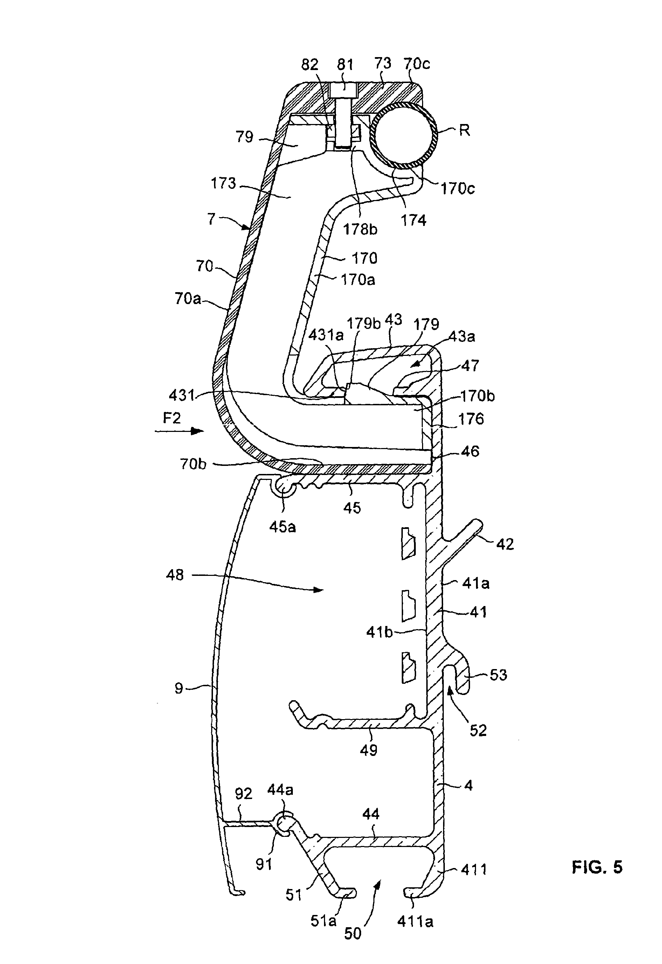

En référence à la figure 5, chaque premier profilé 4 comprend sur la face extérieure 41b de sa paroi principale une aile supérieure 43 et une aile inférieure 44 s'étendant vers l'extérieur sensiblement perpendiculairement depuis la paroi principale. La face extérieure 41b est munie en outre d'une première aile intermédiaire 45 définissant avec l'aile supérieure 43 une gorge 46 latérale longitudinale pour le montage de potelets 7 sur ledit profilé, tel que décrit ci-après. L'aile supérieure 43 se prolonge vers le bas et est munie d'un rebord 431 disposé perpendiculairement à la paroi principale 41 en vis-à-vis d'une ailette 47, de manière à former une rainure longitudinale 43a pour le verrouillage des potelets.

La première aile intermédiaire 45 et l'aile inférieure 44 définissent entre elles une chambre 48 pour loger par exemple des câbles électriques et/ou des conduites de pneumatique du convoyeur, cette chambre pouvant être séparée en deux par une deuxième aile intermédiaire 49, par exemple pour séparer les câbles de commande des câbles de puissance. Cette chambre est avantageusement fermée par un profilé d'habillage ou bandeau 9 venant s'encliqueter sur les bords libres 45a, 44a de la première aile intermédiaire et de l'aile inférieure. Les moyens d'encliquetage 91 inférieurs du bandeau sont prévus à l'extrémité d'une ailette 92 du profilé d'habillage, dans laquelle des découpes pourront être effectuées pour le passage de câbles, sans que ces dernières ne soient visibles de l'extérieur.

Le premier profilé présente en partie inférieure une rainure 50 pour l'assemblage notamment des traverses du châssis. Cette rainure est formée entre la partie d'extrémité inférieure 411 de la paroi principale et une ailette 51 de l'aile inférieure munies à leurs bords libres respectifs de rebords 51a, 411a en vis-à-vis. En référence à la figure 4, l'assemblage d'une traverse 11b est réalisé au moyen de boulons 12 vissés dans des écrous 13 retenus dans la rainure 50. Avantageusement, pour consolider l'assemblage de certaines traverses, par exemple de la traverse amont 11b, la traverse comprend une patte 110 venant contre la face intérieure de la paroi principale du profilé et dont l'extrémité vient se loger dans une rainure 52 (figure 5) formée entre ladite paroi principale et une ailette 53 de cette dernière s'étendant vers le bas. La rainure 50 inférieure peut être utilisée pour l'assemblage de divers supports, tel que le support 34 précité pour le rouleau de renvoi amont 32, ou des coffrets d'asservissement électrique ou pneumatique par exemple.

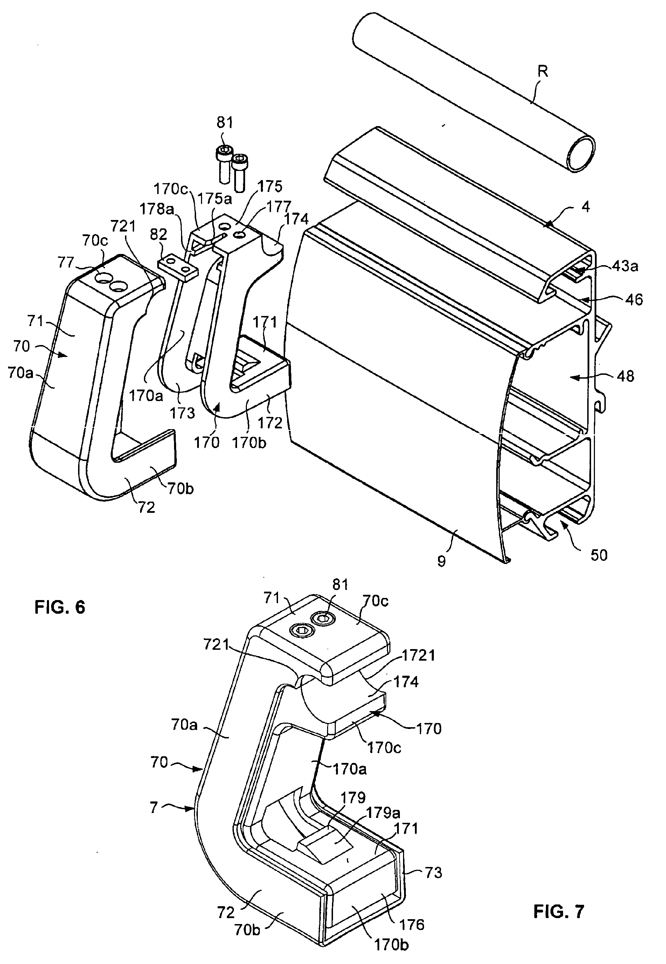

La gorge 46 supérieure du profilé sert au montage de potelets, prévus dans le présent mode de réalisation pour la mise en place de rails R de guidage latéral des charges transportées sur les rouleaux de convoyage. En référence aux figures 6 et 7, le potelet 7 se présente sous la forme d'une pince de type coulissante comprenant une première branche 70 et une seconde branche 170 montée coulissante sur la première branche.

La première branche 70, dite extérieure, a une section transversale en U, avec une paroi centrale 71 et deux parois latérales parallèles 72, 73. La branche extérieure, qui présente une forme générale en C, comprend une partie centrale 70a se prolongeant par une partie inférieure 70b coudée et une partie supérieure 70c coudée, les parois latérales s'étendant vers l'intérieur du C, du côté concave de la paroi centrale, lesdites parois latérales présentant un bord libre de forme générale concave. La partie supérieure 70c constitue la mâchoire supérieure de la pince, dont la forme est adaptée à celle de l'élément à serrer. Dans le présent mode de réalisation, le potelet est prévu pour le montage d'un rail R de guidage formé d'un tube, par exemple creux, de section circulaire. Au niveau de la partie supérieure, les parois latérales présentent un bord libre 721 de forme concave circulaire. Des nervures transversales et/ou longitudinales de formes adaptées, dont l'une longitudinale référencée 73 est visible sur la figure 5, sont avantageusement prévues sur la paroi centrale 71 pour augmenter la surface de serrage de la mâchoire supérieure. La hauteur des parois latérales 72, 73 au niveau de la partie inférieure 70b, définie par la distance entre les bords libres desdites parois latérales et la face extérieure de la paroi centrale est sensiblement égale à la hauteur de la gorge 46 définie entre la paroi intermédiaire 45 et la face inférieure du rebord 431 et de l'ailette 47.

La seconde branche 170, dite intérieure, a également une section transversale en U, avec une paroi centrale 171 et deux parois latérales parallèles 172, 173. La branche extérieure, qui présente également une forme générale en C, comprend une partie centrale 170a se prolongeant par une partie inférieure 170b coudée et une partie supérieure 170c coudée 170c, mais les parois latérales 172, 173 s'étendent cette fois-ci vers l'extérieur du C, du côté convexe de la paroi centrale 170a, lesdites parois latérales présentant un bord libre de forme générale convexe. La partie supérieure coudée 170c constitue la mâchoire inférieure de la pince. Au niveau de la partie supérieure, les parois latérales présentent un bord libre 1721 de forme concave circulaire. Pour augmenter la surface d'appui de la mâchoire inférieure, une paroi concave circulaire 174 relie les deux dits bords libres 1721. Cette paroi concave se prolonge entre les bords libres par une paroi plane 175 dite supérieure. Au niveau de la partie inférieure 170b, les parois latérales sont reliées en extrémité par une paroi d'extrémité dite inférieure 176. La paroi centrale 171 est munie d'un ergot 179 apte à venir s'encliqueter dans la rainure 43b du profilé. L'ergot se présente sous la forme d'une rampe 179a en pente douce en direction de la partie centrale qui se prolonge par une paroi 179b sensiblement verticale rejoignant la paroi centrale.

Les dimensions des deux branches 70, 170 sont définies de sorte que la branche intérieure 170 puisse être montée coulissante dans la branche extérieure 70, les parois latérales de la branche intérieure venant entre les parois latérales de la branche extérieure. La branche intérieure peut coulisser dans la branche extérieure entre une position dite de repos, illustrée à la figure 7, et une position dite de serrage et de verrouillage illustrée à la figure 5.

Dans la position de repos, la partie supérieure 170c de la branche intérieure formant la mâchoire inférieure est écartée de celle 70c de la branche supérieure formant la mâchoire supérieure pour permettre le positionnement entre les deux mâchoires d'un rail R, la distance entre les extrémités des deux parties supérieures étant sensiblement égale ou supérieure au diamètre du rail. La partie inférieure 170b de la branche inférieure est sensiblement en contact par les bords libres des parois latérales 172, 173 contre la paroi centrale de la branche extérieure, son ergot 179 étant disposé en dessous ou sensiblement au niveau des bords libres des parois latérales de la branche extérieure, de sorte que les deux parties inférieures puissent être insérées dans la gorge.

Dans la position de serrage et de verrouillage, les parties supérieures des branches sont rapprochées l'une de l'autre pour bloquer entre elles le rail. Les formes des mâchoires sont avantageusement définies pour serrer le rail sur un secteur angulaire supérieure à 180°. Au niveau des parties centrales 70a, 170a, les parois latérales 172, 173 de la branche intérieure sont contre la paroi centrale 71 par leur bord libre. Au niveau des parties inférieures, les parois latérales 172, 173 sont écartées de la paroi centrale 71, et l'ergot 179 est en saillie par rapport aux bords des parois latérales 72, 73.

Le potelet est équipé de moyens de serrage permettant de déplacer la branche vers sa position de serrage et de verrouillage, et de la bloquer dans cette position. Les moyens de serrage comprennent deux vis 81 passant au niveau de la partie supérieure 70c de la branche extérieure par des perçages 77 de la paroi centrale, et par des perçages 177 de la paroi supérieure 175 précitée de la branche intérieure, que l'on visse dans des trous taraudés d'un écrou 82, placé sous ladite paroi supérieure 175, entre cette dernière et des rainures latérales 178 formées sur les parois latérales 172, 173.

Avantageusement, le potelet est pré-monté avant utilisation, la branche intérieure en position de repos dans la branche extérieure. Pour garantir le positionnement de l'écrou 82 entre les rainures 178 et la paroi supérieure 175, la paroi centrale de la première branche comprend une languette 79 (Figure 5) passant dans une fente 175a de la paroi supérieure pour maintenir par son bord d'extrémité l'écrou contre la face intérieure de la paroi concave 174, avec les trous taraudés de l'écrou disposés suivant les axes des perçages 77, 177. Les vis sont avantageusement pré-vissées dans l'écrou. Avantageusement, pour garantir le maintien des vis avant utilisation du potelet, les vis sont pré-vissées contre le bord non fileté d'une languette 178b servant de frein, disposée au niveau des rainures 178a.

Pour le montage d'un rail, le potelet est pré-monté, tel qu'illustré à la figure 7, et les parties inférieures 70b, 170b sont engagées dans la glissière 46, dans la direction d'insertion représentée par la flèche F2. Le rail est inséré entre les deux mâchoires. Les vis sont ensuite vissées pour amener la branche intérieure en position de serrage et de verrouillage, afin de bloquer le rail entre les deux mâchoires, et engager l'ergot dans la rainure 43a, derrière le bord libre 431a du rebord 431 pour verrouiller le potelet dans la gorge. Lors du serrage, les parois latérales de la branche intérieure viennent en butée par leur bord libre contre le rebord 432 et l'ailette 47, et la paroi inférieure 176 vient en butée contre la paroi principale 41 du profilé. Pour guider le déplacement de la branche intérieure et assurer une bonne mise en appui de cette paroi inférieure 176 contre le profilé, la paroi 179b de l'ergot est avantageusement légèrement inclinée d'amont en aval par rapport à la direction d'insertion F2. Lors du serrage des vis, le bord libre 431a vient contre ladite paroi inclinée et déplace la partie inférieure de la branche inférieure vers l'extérieur de la branche intérieure. Une fois vissées, les vis sont logées dans des lamages de la paroi centrale 71.

Avantageusement, au niveau de la partie inférieure de la branche intérieure, les parois latérales sont munies d'ergots (non représentés) aptes à s'encliqueter dans des rainures verticales (non représentées) ménagées sur les parois latérales de la branche extérieure pour garantir le maintien de la branche intérieure dans la branche extérieure, et à coulisser dans ces dernières pour guider le déplacement de la branche intérieure lors du serrage.

Le potelet peut bien entendu être utilisé pour la fixation de divers éléments, notamment des systèmes d'asservissement électriques du convoyeur, tels que des cellules ou réflecteurs par exemple.

## Revendications

1. Convoyeur comprenant un châssis comportant deux longerons, des moyens de convoyage de charge montés entre les deux longerons, ledit châssis étant équipé d'au moins un support d'éléments apte à être assemblé par sa partie inférieure sur l'un des longerons et à porter par sa partie supérieure un élément au-dessus de la surface de convoyage,
chaque longeron (10) comprend un premier profilé (4) comprenant une gorge longitudinale (46) d'assemblage de supports d'éléments,
ledit support d'éléments (7) comprenant une première branche (70) et une seconde branche (170) montée coulissante sur la première branche, les parties supérieures (70c, 170c) des deux branches formant des mâchoires de serrage d'un élément, **caractérisé en ce que** ledit support d'éléments comprend des moyens de serrage (81, 82) aptes à déplacer par coulissement la seconde branche entre une position de repos dans laquelle les mâchoires sont écartées l'une de l'autre, et les parties inférieures (70b, 170b) des deux branches sont aptes à être insérées dans ladite gorge longitudinale du premier profilé, et une position active de serrage et de verrouillage dans laquelle les mâchoires sont rapprochées l'une de l'autre pour serrer un élément, et un ergot (179) de la partie inférieure (170b) de la seconde branche est apte à venir s'insérer dans une rainure longitudinale (43a) de ladite gorge d'assemblage pour verrouiller le montage du support sur le premier profilé.

2. Convoyeur selon la revendication 1, **caractérisé en ce que** les moyens de serrage (81, 82) sont aptes à maintenir la seconde branche (170) en position de serrage et de verrouillage.

3. Convoyeur selon la revendication 1 ou 2, **caractérisé en ce que** le premier profilé (4) comprend une paroi principale verticale (41) munie sur sa face extérieure (41a) d'une aile supérieure (43) et d'une aile intermédiaire (45) s'étendant latéralement vers l'extérieur depuis ladite paroi principale et définissant entre elles ladite gorge longitudinale (46) en partie supérieure du premier profilé (4), lesdites branches comprenant des parties inférieures (70b, 170b) coudées aptes à venir s'insérer dans ladite gorge longitudinale (46).

4. Convoyeur selon la revendication 3, **caractérisé en ce que** chaque branche (70, 170) présente une forme générale en C, avec une partie centrale (70a, 170a) se prolongeant par ladite partie inférieure (70b, 170b) coudée et une partie supérieure (70c, 170c) coudée, et présente une section transversale globalement en U, avec une paroi centrale (71 ; 171) et deux parois latérales parallèles (72, 73 ; 172, 173), de sorte que la seconde branche (170) puisse être montée coulissante dans la branche extérieure (70), les parois latérales de la première branche venant entre les parois latérales de la seconde branche, ledit ergot (179) étant formé sur la paroi centrale de la seconde branche et étant apte à s'insérer dans une rainure (43a) ménagée au niveau de l'aile supérieure (43) du premier profilé (4).

5. Convoyeur selon la revendication 4, **caractérisé en ce qu'**en position de serrage et de verrouillage, le support (7) est en butée par la paroi centrale (71) de la première branche (70) contre l'aile intermédiaire (45) et en butée par le bord libre des parois latérales (172, 173) de la seconde branche (170) contre l'aile supérieure (43).

6. Convoyeur selon la revendication 4 ou 5, **caractérisé en ce que** ledit ergot (179) présente une paroi (179b) inclinée coopérant avec un bord (431a) de la rainure (43a) pour amener la partie inférieure de la seconde branche contre la paroi principale verticale du premier profilé (4).

7. Convoyeur selon l'une des revendications 4 à 6, **caractérisé en ce que** les moyens de serrage comprennent au moins une vis (81) passant par un perçage (77) de la paroi principale (71) de la première branche (70) au niveau de sa partie supérieure (70a) et un perçage (177) d'une paroi supérieure (175) reliant les parois latérales (172, 173) de la seconde branche (170), le serrage d'un élément et le verrouillage du support étant obtenus par vissage de ladite vis dans un écrou (82) placé sous ladite paroi supérieure.

8. Convoyeur selon la revendication 7, **caractérisé en ce que** la seconde branche (170) comprend des moyens de retenue (178b) de la vis (81) pour retenir la vis pré-vissée sur l'écrou (82) lorsque la seconde branche est en position de repos, et/ou des moyens de maintien (178a, 79) pour maintenir l'écrou sensiblement dans l'axe des perçages (77, 177) lorsque la seconde branche est montée dans la première branche.

9. Convoyeur selon l'une des revendications 3 à 8, **caractérisé en ce que** la paroi principale verticale (41) du premier profilé (4) est munie sur sa face extérieure (41b) d'une aile inférieure (44) formant une rainure inférieure pour l'assemblage de traverses de liaison des longerons, l'aile intermédiaire et l'aile inférieure définissant une chambre latérale.

10. Convoyeur selon l'une des revendications 3 à 9, **caractérisé en ce que** chaque longeron (10) comprend un second profilé (6) pour le montage des moyens de convoyage (2), qui est assemblé sur la face intérieure (41a) du premier profilé, l'assemblage du second profilé étant avantageusement réalisé par insertion d'une aile (42) inclinée vers l'extérieur de bas en haut du premier profilé dans une fente longitudinale (53) du second profilé (6), le poids des moyens de convoyage supportés par le second profilé assurant le maintien du second profilé sur le premier profilé.

## Claims

1. Conveyor comprising a structure having two side members, load conveying means mounted between the two side members, said structure being equipped with at least one element bracket able to be fitted by way of its lower part on one of the side members and to carry on its upper part an element above the conveying surface,
each side member (10) comprises a first profiled section (4) comprising a longitudinal groove (46) for fitting element brackets,
said element bracket (7) comprising a first arm (70) and a second arm (170) that is mounted in a slidable manner on the first arm, the upper parts (70c, 170c) of the two arms forming jaws for clamping an element,
**characterized in that** said element bracket comprises clamping means (81, 82) which are able to slide the second arm between a rest position in which the jaws are spaced apart from one another, and the lower parts (70b, 170b) of the two arms are able to be inserted into said longitudinal groove in the first profiled section, and an active clamping and locking position in which the jaws are moved closer together in order to clamp en element, and a protrusion (179) of the lower part (170b) of the second arm is able to be inserted into a longitudinal channel (43a) of said assembly groove in order to lock the mounting of the bracket on the first profiled section.

2. Conveyor according to Claim 1, **characterized in that** the clamping means (81, 82) are able to keep the second arm (170) in the clamping and locking position.

3. Conveyor according to Claim 1 or 2, **characterized in that** the first profiled section (4) comprises a vertical main wall (41) provided on its outer face (41a) with an upper wing (43) and an intermediate wing (45) that extend laterally outwards from said main wall and define between one another said longitudinal groove (46) in the upper part of the first profiled section (4), said arms comprising angled lower parts (70b, 170b) that are able to be inserted into said longitudinal groove (46).

4. Conveyor according to Claim 3, **characterized in that** each arm (70, 170) is generally C-shaped, having a central part (70a, 170a) that is prolonged by said angled lower part (70b, 170b) and an angled upper part (70c, 170c), and has an overall U-shaped cross section, having a central wall (71; 171) and two parallel side walls (72, 73; 172, 173), such that the second arm (170) can be mounted in a slidable manner in the outer arm (70), the side walls of the first arm coming between the side walls of the second arm, said protrusion (179) being formed on the central wall of the second arm and being able to be inserted into a channel (43a) provided in the upper wing (43) of the first profiled section (4).

5. Conveyor according to Claim 4, **characterized in that**, in the clamping and locking position, the bracket (7) is in abutment against the intermediate wing (45) by way of the central wall (71) of the first arm (70) and is in abutment against the upper wing (43) by way of the free edge of the side walls (172, 173) of the second arm (170).

6. Conveyor according to Claim 4 or 5, **characterized in that** said protrusion (179) has an inclined wall (179b) that engages with an edge (431a) of the channel (43a) in order to move the lower part of the second arm against the vertical main wall of the first profiled section (4).

7. Conveyor according to one of Claims 4 to 6, **characterized in that** the clamping means comprise at least one screw (81) that passes through a pierced hole (77) in the main wall (71) of the first arm (70) in its upper part (70a) and a pierced hole (177) in an upper wall (175) that connects the side walls (172, 173) of the second arm (170), an element being clamped and the bracket being locked by said screw being screwed into a nut (82) placed under said upper wall.

8. Conveyor according to Claim 7, **characterized in that** the second arm (170) comprises means (178b) for retaining the screw (81) in order to retain the screw in a pre-screwed manner on the nut (82) when the second arm is in the rest position, and/or holding means (178a, 79) in order to hold the nut approximately in the axis of the pierced holes (77, 177) when the second arm is mounted in the first arm.

9. Conveyor according to one of Claims 3 to 8, **characterized in that** the vertical main wall (41) of the first profiled section (4) is provided on its outer face (41b) with a lower wing (44) that forms a lower channel for fitting cross members for connecting the side members, the intermediate wing and the lower wing defining a side chamber.

10. Conveyor according to one of Claims 3 to 9, **characterized in that** each side member (10) comprises a second profiled section (6) for mounting conveying means (2), said second profile section (6) being fitted on the lower face (41a) of the first profiled section, the second profiled section being advantageously fitted by a wing (42), which is inclined outwardly from bottom to top, of the first profiled section being inserted into a longitudinal slot (63) in the second profiled section (6), the weight of the conveying means supported by the second profiled section ensuring that the second profiled section is held on the first profiled section.

## Patentansprüche

1. Fördereinrichtung, enthaltend einen Rahmen mit zwei Längsträgern und Lastfördermittel, die zwischen den beiden Längsträgern angebracht sind, wobei der Rahmen mit zumindest einem Teileträger ausgestattet ist, der geeignet ist, mit seinem unteren Bereich an einen der Längsträger montiert zu werden und mit seinem oberen Bereich ein Teil über der Förderfläche zu tragen,
wobei jeder Längsträger (10) ein erstes Profil (4) mit einer Längsnut (46) zum Montieren der Teileträger aufweist,
wobei der Teileträger (7) einen ersten Schenkel (70) und einen zweiten Schenkel (170) aufweist, der am ersten Schenkel gleitbeweglich gelagert ist, wobei die oberen Bereiche (70c, 170c) der beiden Schenkel Spannbacken zum Einspannen eines Teils bilden,
**dadurch gekennzeichnet, dass**
der Teileträger Einspannmittel (81, 82) aufweist, die geeignet sind, den zweiten Schenkel zwischen einer Ruhestellung, in welcher die Backen voneinander beabstandet sind und die unteren Bereiche (70b, 170b) der beiden Schenkel in die Längsnut des ersten Profils eingeschoben werden können, und einer aktiven Einspann- und Verriegelungsstellung durch eine Gleitbewegung zu verschieben, in welcher die Backen einander angenähert sind, um ein Teil einzuspannen, und dass ein Vorsprung (179) des unteren Bereichs (170b) des zweiten Schenkels dazu geeignet ist, sich in eine Längsrille (43a) der Montagenut einzuschieben, um die Anbringung des Trägers an das erste Profil zu verriegeln.

2. Fördereinrichtung nach Anspruch 1, **dadurch gekennzeichnet, dass** die Einspannmittel (81, 82) dazu geeignet sind, den zweiten Schenkel (170) in Einspann- und Verriegelungsstellung zu halten.

3. Fördereinrichtung nach Anspruch 1 oder 2, **dadurch gekennzeichnet, dass** das erste Profil (4) eine senkrechte Hauptwand (41) aufweist, die an ihrer Außenseite (41 a) mit einem oberen Steg (43) und mit einem Zwischensteg (45) versehen ist, die sich von der Hauptwand ausgehend seitlich nach außen erstrecken und zwischen sich die Längsnut (46) im oberen Bereich des ersten Profils (4) definieren, wobei die Schenkel gekrümmte untere Bereiche (70b, 170b) aufweisen, die dazu geeignet sind, sich in die Längsnut (46) einzuschieben.

4. Fördereinrichtung nach Anspruch 3, **dadurch gekennzeichnet, dass** jeder Schenkel (70, 170) eine C-Form mit einem Mittelbereich (70a, 170a) aufweist, der sich über den gekrümmten unteren Bereich (70b, 170b) fortsetzt, und mit einem gekrümmten oberen Bereich (70c, 170c), und einen U-förmigen Querschnitt mit einer Mittelwand (71; 171) und zwei parallel verlaufenden Seitenwänden (72, 73; 172, 173) aufweist, so dass der zweite Schenkel (170) im Außenschenkel (70) gleitbeweglich gelagert werden kann, wobei die Seitenwände des ersten Schenkels zwischen die Seitenwände des zweiten Schenkel zu liegen kommen, wobei der Vorsprung (179) an der Mittelwand des zweiten Schenkels ausgebildet und dazu geeignet ist, sich in eine Rille (43a) einzuschieben, die im Bereich des oberen Stegs (43) des ersten Profils (4) ausgeführt ist.

5. Fördereinrichtung nach Anspruch 4, **dadurch gekennzeichnet, dass** in Einspann- und Verrieglungsstellung der Träger (7) mit der Mittelwand (71) des ersten Schenkels (70) an dem Zwischensteg (45) in Anschlag ist und mit dem freien Rand der Seitenwände (172, 173) des zweiten Schenkels (170) an dem oberen Steg (43) in Anschlag ist.

6. Fördereinrichtung nach Anspruch 4 oder 5, **dadurch gekennzeichnet, dass** der Vorsprung (179) eine geneigt verlaufende Wand (179b) aufweist, die mit einem Rand (431a) der Rille (43a) zusammenwirkt, um den unteren Bereich des zweiten Schenkels an die senkrechte Hauptwand des ersten Profils (4) mitzunehmen.

7. Fördereinrichtung nach einem der Ansprüche 4 bis 6, **dadurch gekennzeichnet, dass** die Einspannmittel zumindest eine Schraube (81) aufweisen, die durch eine Bohrung (77) der Hauptwand (71) des ersten Schenkels (70) in Höhe seines oberen Bereichs (70a) und durch eine Bohrung (177) einer oberen Wand (175) tritt, welche die Seitenwände (172, 173) des zweiten Schenkels (170) verbindet, wobei das Einspannen eines Teils und das Verriegeln des Trägers durch Einschrauben der Schraube in eine Mutter (82) erhalten werden, die unter der oberen Wand angeordnet ist.

8. Fördereinrichtung nach Anspruch 7, **dadurch gekennzeichnet, dass** der zweite Schenkel (170) Haltemittel (178b) für die Schraube (81) aufweist, um die Schraube an der Mutter (82) voreingeschraubt zu halten, wenn der zweite Schenkel in Ruhestellung ist, und/oder Haltemittel (178a, 79) zum Halten der Mutter im wesentlichen in der Achse der Bohrungen (77, 177), wenn der zweite Schenkel in dem ersten Schenkel gelagert ist.

9. Fördereinrichtung nach einem der Ansprüche 3 bis 8, **dadurch gekennzeichnet, dass** die senkrechte Hauptwand (41) des ersten Profils (4) an ihrer Außenseite (41 b) mit einem unteren Steg (44) versehen ist, der eine untere Rille für das Anbringen von Verbindungstraversen für die Längsträger bildet, wobei der Zwischensteg und der untere Steg einen Seitenraum definieren.

10. Fördereinrichtung nach einem der Ansprüche 3 bis 9, **dadurch gekennzeichnet, dass** jeder Längsträger (10) ein zweites Profil (6) für das Montieren der Fördermittel (2) aufweist, das an die Innenseite (41 a) des ersten Profils angebracht ist, wobei die Anbringung des zweiten Profils vorteilhaft durch Einsetzen eines von unten nach oben und nach außen geneigt verlaufenden Stegs (42) des ersten Profils in einen Längsschlitz (53) des zweiten Profils (6) erfolgt, wobei durch das Gewicht der von dem zweiten Profil getragenen Fördermittel der Halt des zweiten Profils am ersten Profil gewährleistet wird.
